# EUROPÄISCHE PATENTSCHRIFT

(11) **EP 1 108 572 B1**
(45) Veröffentlichungstag und Bekanntmachung des Hinweises auf die Patenterteilung: **26.10.2005**
(21) Anmeldenummer: 00122573.9
(22) Anmeldetag: 17.10.2000
(51) Int. Cl.: B60H 1/00, B60H 1/03, B60H 1/22

(54) **Wärmetauschsystem für die Heizung eines Fahrzeugs mit Hybridantrieb**
Heat exchange system for the heating of a vehicle with hybrid propulsion
Système d'échange de chaleur pour le chauffage d'un véhicule à propulsion hybride

(30) Priorität: 17.12.1999 DE 19960960
(43) Veröffentlichungstag der Anmeldung: 20.06.2001
(73) Patentinhaber: ROBERT BOSCH GMBH, 70442 Stuttgart (DE)
(72) Erfinder: Hohl, Reiner, 70197 Stuttgart (DE); Schmitt, Manfred, 64646 Heppenheim (DE)

(56) Entgegenhaltungen:
- WO-A-01/34952
- DE-A- 3 442 350
- FR-A- 2 748 428
- US-A- 5 251 588

## Beschreibung

### Stand der Technik

Die Erfindung betrifft ein Wärmetauschsystem für die Heizung eines Fahrzeugs mit Hybridantrieb, Starter, Generator, o. ä., wobei zur Steuerung eines Elektromotors des Hybridantriebs Leistungshalbleiter eingesetzt sind, die beim Fahrbetrieb Wärme abgeben und die von einem in einem Elektronikkühlkreislauf strömenden Kühlfluid gekühlt werden, welches durch einen Heizungswärmetauscher des Fahrzeugs strömen kann.

Aus der DE 34 42 350 C2 ist ein Wärmetauschsystem für die Heizung eines Straßenfahrzeuges mit Elektroantrieb bekannt. Die zur Steuerung des Fahrmotors dienenden Leistungshalbleiter, die beim Fahrbetrieb Wärme abgeben, sind mit Vorrichtungen zur Flüssigkeitskühlung versehen, deren Kühlanschlüsse über ein geschlossenes Leitungssystem mit einer Pumpe und einer Wärme an den Innenraum abgebenden Heizungsanlage des Straßenfahrzeugs verbunden sind, und das gesamte System ist mit einer isolierenden Flüssigkeit, vorzugsweise Transformatorenöl, gefüllt, die durch die Pumpe umgewälzt wird. Dadurch wird die von den Leistungshalbleitern über die Kühlkörper abgeführte Wärme der Heizungsanlage zugeführt.

Weiterhin sind fluidgekühlte Elektronikbauteile im Fahrzeug sowie die Nutzung der Abwärme von Hochleistungsbatterien zur Fahrzeugheizung bekannt.

Ein weiteres Beispiel für eine bereits realisierte Nutzung der Abwärme elektrischer Komponenten im Fahrzeug ist der wassergekühlte Generator.

In Fahrzeugen mit Hybridantrieb fallen in der Leistungselektronik thermische Verlustleistungen in der Größenordnung von 1 kW an. Gleichzeitig sinkt der vom Verbrennungsmotor des Hybridantriebs an das Kühlwasser abgegebene Wärmeeintrag, wenn das Fahrzeug mit rein elektrischem Fahrbetrieb sowie im Start-Stop-Betrieb angetrieben wird. Schon heute sind in verbrauchsarmen Fahrzeugen, die z. B. mit TDI-Motoren ausgerüstet sind, Zusatzheizer für den Fahrgastraum notwendig.

Ein Hauptproblem beim Eintrag der Verlustwärme von elektronischen Leistungshalbleitern in den Kühlkreislauf eines Fahrzeugs besteht darin, bei hohen Kühlwassertemperaturen die zulässige Bauteiletemperatur der Leistungshalbleiter nicht zu überschreiten.

### Aufgabe und Vorteile der Erfindung

Aufgabe der Erfindung ist bei einem Fahrzeug mit Hybridantrieb, bei dem ein Verbrennungsmotor mit einem elektrischen Antrieb gekoppelt ist, die Abwärme von Leistungselektronik zum Aufheizen des Kühlwassers zu nutzen, ohne dabei die zulässigen Bauteiletemperaturen der Elektronikkomponenten, insbesondere der Leistungshalbleiter zu überschreiten. Gleichzeitig soll eine Grundheizfunktion für den Fahrgastraum während der Stillstandsphasen des Verbrennungsmotors sichergestellt werden.

Die obige Aufgabe wird anspruchsgemäß gelöst.

Gemäß einem wesentlichen Aspekt ist ein erfindungsgemäßes Wärmetauschsystem dadurch gekennzeichnet, dass das Kühlfluid für die Leistungshalbleiter dasselbe zur Kühlung des Verbrennungsmotors durch dessen eine mechanische Kühlfluidpumpe aufweisenden Motorkühlkreislauf strömende Kühlfluid ist, und dass im Kühlkreislauf der Leistungshalbleiter eine elektrisch angetriebene Kühlfluidpumpe sowie Verbindungselemente vorgesehen sind, die schon bei niedrigen Kühlfluidtemperaturen den Kühlkreislauf der Leistungshalbleiter mit dem Motorkühlkreislauf so verbinden, dass eine obere Temperatur für die Kühlung der Leistungshalbleiter nicht überschritten wird.

Das erfindungsgemäße Wärmetauschsystem eignet sich besonders für ein Fahrzeug, das im Start-Stop-Betrieb betrieben wird, wobei der Verbrennungsmotor des Hybridantriebs nur wenig Wärme erzeugt.

Die Nutzung der Abwärme von Elektronikkomponenten führt zu einer schnelleren Aufheizung des Motorkühlkreislaufs und damit zur Reduzierung des Kraftstoffverbrauchs, da eine schnellere Aufheizung des Kühlwassers mit schnellerer Motoraufheizung verbunden ist. Ferner führt die schnellere Aufheizung des Kühlwassers zu höherem Fahrgastkomfort, da die höhere Kühlwassertemperatur mehr Wärme ins Fahrzeuginnere transportieren kann. Dadurch können Zusatzheizungen zumeist entfallen, was zur Verbrauchsersparnis und gegebenenfalls Kostenersparnis führt. Ein typischer Kleinwagen mit Ottomotor führt dem Kühlwasser im MVEG-Zyklus eine mittlere Wärmeleistung von 6 kW zu. Dabei ist angenommen, dass 35 % der verbrauchten Energie ins Kühlwasser gehen. Die nutzbare Wärme der Leistungselektronik liegt bei ca. 1 kW.

Ein weiterer Vorteil der Erfindung liegt darin, dass bei einem Stillstand des Verbrennungsmotors im Start-Stop-Betrieb oder bei elektrischem Fahrbetrieb eine Grundheizfunktion sichergestellt ist. Dies ist ansonsten nicht der Fall, da beim Stillstand des Verbrennungsmotors auch die mechanische Wasserpumpe des Motorkühlkreislaufs zum Stillstand kommt und kein Kühlwasser durch den Heizungswärmetauscher für die Fahrgastraumheizung pumpt. Mit Hilfe der durch die Erfindung sichergestellten Grundheizfunktion kann bei mäßig großem Heizbedarf auf den Einsatz sogenannter Komfortfunktionen, die mit dem Lauf des Verbrennungsmotors verbunden sind, häufig verzichtet werden, und die verbrauchsrelevanten Vorteile des Start-Stop-Betriebs sowie des elektrischen Fahrbetriebs bleiben erhalten.

Die obigen und weitere vorteilhafte Merkmale der Erfindung werden in der nachfolgenden Beschreibung mehrerer Ausführungsbeispiele erläutert, die sich auf die beiliegende Zeichnung bezieht.

### Zeichnung

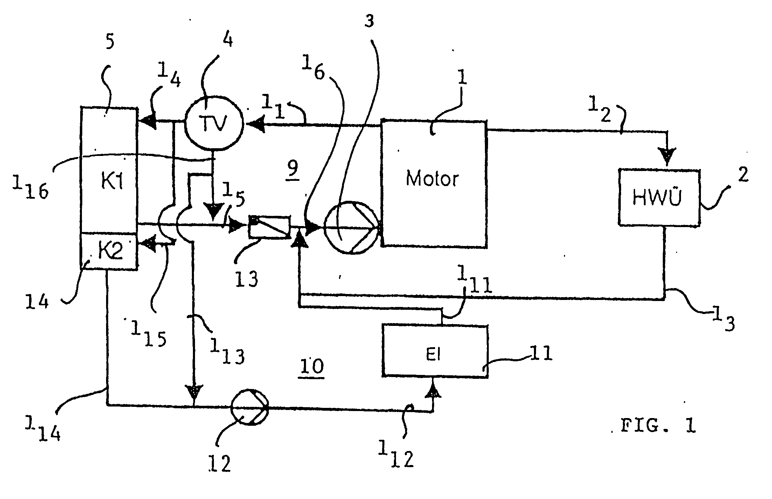

Die Figuren 1 - 4 zeigen schematisch jeweils ein Ausführungsbeispiel eines erfindungsgemäßen Wärmetauschsystems, bei denen jeweils sichergestellt ist, dass zum einen die Zulauftemperatur des Kühlmittels zu den Leistungshalbleitern eine zulässige obere Temperatur nicht überschreiten kann und zum anderen, dass die von den Leistungshalbleitern mit dem Kühlmittel abgeführte Wärme zur Heizung des Fahrgastraums durch den Heizungswärmetauscher auch dann strömen kann, wenn das im Kühlkreislauf des Verbrennungsmotors eingebaute Thermostatventil noch geschlossen ist, und

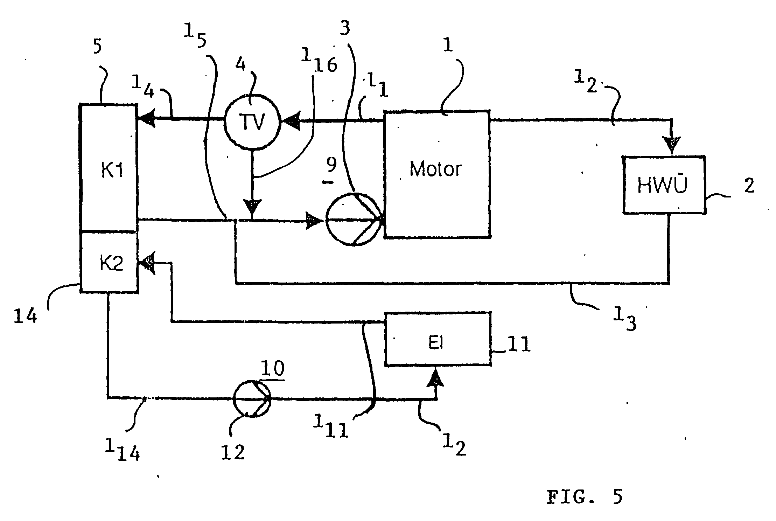

Figur 5 zeigt ein zur Erläuterung der Prinzipien der Erfindung dienendes beispielhaftes Wärmetauschsystem, das nicht die erfindungsgemäßen Merkmale aufweist.

Zunächst wird anhand der Figur 5 beispielhaft ein aus einem Motorkühlkreislauf 9 und einem separaten Kühlkreislauf 10 für Elektronikkomponenten bestehendes Wärmetauschsystem beschrieben.

Der Motorkühlkreislauf 9 führt vom Zylinderkopf des Verbrennungsmotors 1 über eine Leitung l₁ zu einem Thermostatventil 4, bei geöffnetem Thermostatventil 4 über eine Leitung l₄ zu einem Motorkühler (K1) 5 und über eine Leitung l₅ zu einer mechanischen Wasserpumpe 3, die das Kühlwasser durch den Motor 1 pumpt. Ferner strömt das Kühlwasser vom Motor 1 durch eine Leitung l₂ in einen Heizungswärmetauscher (HWÜ) 2 und von dort durch eine Leitung l₃ zurück zur Wasserpumpe 3. Bei niedrigen Temperaturen, z. B. unter 90° C bleibt das Thermostatventil 4 geschlossen und das Kühlwasser wird von der mechanischen Wasserpumpe 3 bei laufendem Motor 1 über die Leitungen l₁, l₁₆, l₅ durch den Motor 1 und außerdem durch die Leitungen l₂ und l₃ durch den Heizungswärmetauscher 2 unter Umgehung des Kühlers 5 gepumpt. Bei stehendem Verbrennungsmotor 1 läuft die mechanische Wasserpumpe 3 nicht und kann deshalb kein Kühlwasser durch den Motor 1 und den Heizungswärmetauscher 2 pumpen. Wenn die Kühlwassertemperatur die Öffnungstemperatur des Thermostatventils 4 überschreitet, z. B. 90° C, öffnet das Thermostatventil 4 den Kreislauf zum Motorkühler 5 hin und schließt gleichzeitig den Bypassweg l₁₆.

In einem vom Motorkühlkreislauf getrennten Kühlkreislauf 10, der nachstehend Elektronikkühlkreislauf genannt ist, wird die Wärme der Elektronikkomponenten, d. h. der Leistungshalbleiter 11 durch den Einsatz einer elektrischen Wasserpumpe 12 und eines zweiten Kühlermoduls 14 über Leitungen l₁₁, l₁₂, l₁₄ abgeführt.

Bei dem oben beschriebenen Beispiel eines Wärmetauschsystems kann die von den Elektronikkomponenten durch den Elektronikkühlkreislauf 10 abgeführte Wärme das Kühlwasser im Motorkühlkreislauf 9 nicht oder nur geringfügig erwärmen. Es führt kein Kühlwasserstrom vom Elektronikkühlkreislauf 10 durch den Heizungswärmetauscher 2.

In Figur 1 ist blockschaltbildartig ein erstes Ausführungsbeispiel der Erfindung dargestellt, bei dem die Abwärme der Elektronikkomponente 11 in den Motorkühlkreislauf 9 eingekoppelt wird und bei dem zusätzlich sichergestellt ist, dass die Temperatur des Kühlwassers im Elektronikkühlkreislauf 10 die zulässige Höchsttemperatur für die Elektronikbauteile in der Komponente 11 nicht überschreitet.

Gemäß Figur 1 ist der Elektronikkühlkreislauf 10 über Verbindungselemente mit dem Motorkühlkreislauf 9 so verbunden, dass zunächst, wenn bei niedriger Kühlwassertemperatur das Thermostatventil 4 geschlossen ist, ein geringerer Teil des Volumenstroms im Motorkühlkreislauf 9 zur elektrischen Wasserpumpe 12 abgezweigt wird und die Leistungselektronik kühlt. Steht die mechanische Pumpe 3 still, so pumpt die kleinere elektrische Wasserpumpe 12 Kühlwasser durch den Motor 1 und den Heizungswärmetauscher 2. Dabei kommt es im Kühlwasser 2 des Heizungswärmetauschers 2 zu einer Strömungsrichtungsumkehr. Eine Rückschlagklappe 13, die stromaufwärts von der mechanischen Wasserpumpe 3 zwischen dieser und dem Ablaufstutzen des Motorkühlers 5 vorgesehen ist, verhindert, dass Kühlwasser direkt vom Ausgang der Leistungselektronik 11 zur elektrischen Wasserpumpe 12 zurückströmt.

Übersteigt die Kühlwassertemperatur einen vorgegebenen Wert, nämlich die Öffnungstemperatur des Thermostatventils 4, die üblicherweise 90° C beträgt, so öffnet das Thermostatventil 4 zum Motorkühler 5 hin. Mit zunehmender Öffnung des Thermostatventils 4 fließt über eine Leitung l₁₅ entsprechend mehr Flüssigkeit durch den zweiten kleineren Elektronikkühler 14 und stellt eine ausreichend niedrige Zulauftemperatur zur Leistungselektronik 11 sicher.

Wie Figur 1 zeigt, bestehen die beim ersten Ausführungsbeispiel verwendeten Verbindungsmittel aus einer von der Bypassleitung l₁₆ des Thermostatventils 4 abzweigenden Leitung l₁₃, die zur stromaufwärtigen Seite der elektrischen Wasserpumpe 12 führt, der Leitung l₁₅ von dem Motorkühler-Einlaufstutzen, d. h. von der zum Motorkühler 5 führenden Leitung l₄ zum Einlaufstutzen des zweiten Kühlers 14 sowie aus einer Leitung l₁₁, die vom Auslauf des Kühlkörpers der Leistungselektronik 11 zur Zulaufseite der mechanischen Wasserpumpe 3, d. h. zu einer Leitung l₆ führt, die die stromaufwärtige Rückschlagklappe 13 mit der mechanischen Wasserpumpe 3 verbindet.

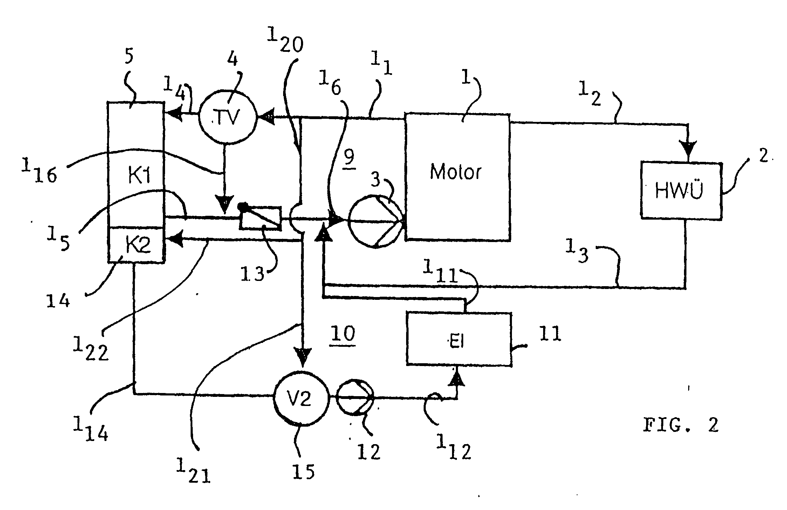

Bei dem in Figur 2 gezeigten Ausführungsbeispiel befindet sich im Elektronikkühlkreislauf 10 ein zweites Ventil 15, das ein ansteuerbares Servoventil oder ein Thermostatventil sein kann, welches bereits bei niedrigen Temperaturen zum zweiten Kühler 14 hin öffnet. Es ist zu bemerken, dass das zweite Ventil 15 sowohl im Zulauf zum zweiten Kühler 14 als auch, wie dargestellt, im Ablauf, d. h. in der Leitung l₁₄ vom zweiten Kühler 14, liegen kann. Eine Verbindungsleitung l₂₀, l₂₁ führt von der Zulaufseite (dem Eingang) des Thermostatventils 4 im Motorkühlkreislauf 9 zum zweiten Ventil 15 und weist eine Abzweigleitung l₂₂ auf, die zum Zulaufstutzen des zweiten Kühlers 14 führt. Besonders das in Figur 2 dargestellte Ausführungsbeispiel, welches sich ansonsten von dem in Figur 1 gezeigten nicht unterscheidet, erlaubt es, die Zulauftemperatur zur Leistungselektronik 11 auf einer Temperatur unterhalb der Öffnungstemperatur des Thermostatventils (z. B. 90° C) zu halten, da, wie erwähnt, das zweite Ventil 15 bereits bei niedrigeren Temperaturen zum zweiten Kühler 14 hin öffnet oder geöffnet wird.

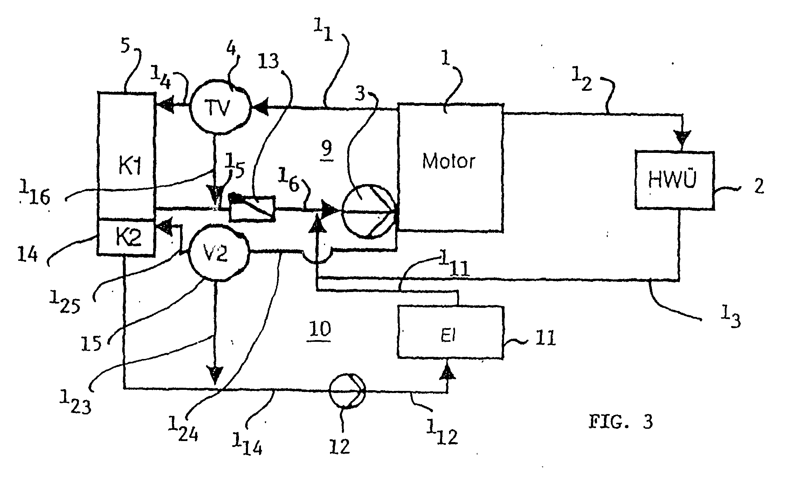

Figur 3 zeigt ein mit dem Ausführungsbeispiel in Figur 2 vergleichbares Konzept. Hier wird der Volumenstrom des Kühlwassers vom Motorkühlkreislauf 9 direkt hinter der mechanischen Wasserpumpe 3 über eine Leitung 124 abgezweigt, die zum Eingang des zweiten Ventils 15 und von dort, wenn das zweite Ventil 15 geschlossen ist, über die Leitung l₂₃ zur elektrischen Wasserpumpe 12, oder wenn das zweite Ventil 15 geöffnet ist, über die Leitung l₂₅ zum zweiten Kühler 14 strömen kann. Vorteil des in Figur 3 gezeigten Konzepts ist, dass die Kühlwassertemperatur vor Eintritt in den Motor 1 auf einem niedrigeren Niveau liegt als am Ausgang vom Zylinderkopf (Leitung l₁). Allerdings muss die Abzweigung hinter der mechanischen Wasserpumpe 3 bereits bei der Entwicklung des Motorblocks und der mechanischen Wasserpumpe vorgesehen werden.

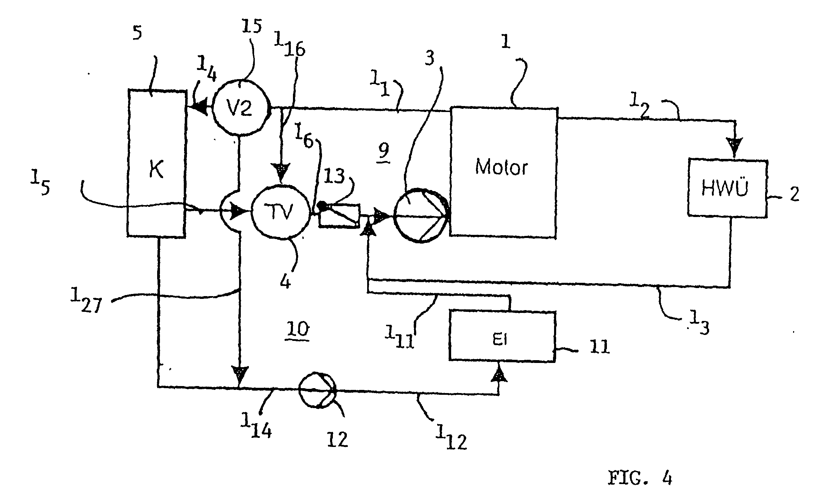

Das in Figur 4 gezeigte vierte Ausführungsbeispiel ist unter thermischen Gesichtspunkten weitgehend äquivalent zu der in Figur 2 dargestellten Ausführung. Gemäß Figur 4 sitzt das Thermostatventil 4 auf der Motoreingangsseite vor der Rückschlagklappe 13 und der mechanischen Wasserpumpe 3. Das zweite Steuerventil 15, das auch hier ein ansteuerbares Servoventil oder ein Thermostatventil sein kann, öffnet bei einer Wassertemperatur unterhalb der Öffnungstemperatur des Thermostatventils 4 zum Kühler 5 hin, so dass das Kühlwasser dann nicht über die Leitung l₂₇ sondern über die Leitung l₄ durch den Kühler 5, über die Leitung l₁₄ zur elektrischen Wasserpumpe 12 und von dort durch den Kühlkörper der Leistungselektronik 11 strömen kann. Auf diese Weise erfolgt die Kühlung der Leistungselektronik 11 mit ausreichend kalter Flüssigkeit. Im Gegensatz zu den zuvor beschriebenen Ausführungsbeispielen, wie sie in den Figuren 1-3 gezeigt sind, ist der Kühler 5 intern geteilt, so dass nur ein Zulaufstutzen erforderlich ist.

## Patentansprüche

1. Wärmetauschsystem für die Heizung eines Fahrzeugs mit Hybridantrieb, wobei zur Steuerung eines Elektromotors des Hybridantriebs Leistungshalbleiter (11) eingesetzt sind, die beim Fahrbetrieb Wärme abgeben und die von einem in einem Kühlkreislauf (10) die Leistungshalbleiter umströmenden Kühlfluid gekühlt werden, welches durch einen Heizungswärmetauscher (2) des Fahrzeugs strömen kann,
**dadurch gekennzeichnet, dass** ein Verbrennungsmotor (1) des Hybridantriebs eine mechanische Kühlfluidpumpe in einem Motorkühlkreislauf (9) aufweist, das Kühlfluid des Elektronikkühlkreislaufes (10) das zur Kühlung des Verbrennungsmotors (1) durch seinen Motorkühlkreislauf (9) strömende Kühlfluid ist, und dass im Kühlkreislauf (10) der Leistungshalbleiter (11) eine elektrisch angetriebene Kühlfluidpumpe (12) sowie Verbindungselemente vorgesehen sind, die schon bei niedrigen Kühlfluidtemperaturen den Kühlkreislauf (10) der Leistungshalbleiter (11) mit dem Motorkühlkreislauf (9) so verbinden, dass eine obere Temperaturgrenze für die Kühlung der Leistungshalbleiter (11) nicht überschritten wird.

2. Wärmetauschsystem nach Anspruch 1, **dadurch gekennzeichnet, dass** das Kühlfluid Wasser oder ein zur Motorkühlung übliches Wasser/Glykolgemisch ist.

3. Wärmetauschsystem nach Anspruch 2, **dadurch gekennzeichnet, dass** der Kühlkreislauf (10) der Leistungshalbleiter (11) und der Motorkühlkreislauf (9) jeweils einen für die Kühlwasserströme getrennten ersten und zweiten Wasserkühler (5, 14) aufweisen.

4. Wärmetauschsystem nach Anspruch 3, **dadurch gekennzeichnet, dass** ein Thermostatventil (4) im Motorkühlkreislauf (9) vorgesehen ist, das während der Aufheizphase bei niedrigen Temperaturen des Kühlwassers geschlossen ist und bei Kühlwassertemperaturen oberhalb einer bestimmten Öffnungstemperatur einen Strömungsweg für das Kühlwasser zum ersten Wasserkühler (5) öffnet.

5. Wärmetauschsystem nach einem der Ansprüche 1 - 4, **dadurch gekennzeichnet, dass** die Verbindungselemente (l₁₃, l₁₄, l₁₅) schon bei niedrigen Kühlfluidtemperaturen einen Teil des Volumenstroms des Kühlwassers im Motorkühlkreislauf (9) zur elektrischen Pumpe (12) des Kühlkreislaufs (10) der Leistungshalbleiter (11) abzweigen, um die Leistungshalbleiter (11) zu kühlen und diesen Volumenstrom zum Motorkühlkreislauf (9) an einer Stelle stromaufwärts von der mechanischen Wasserpumpe (3) zurückführen, wobei bei Stillstand der mechanischen Wasserpumpe (3) die elektrische Pumpe (12) im Kühlkreislauf (10) der Leistungshalbleiter (11) das Kühlwasser durch den Verbrennungsmotor (1) und den Heizungswärmeübertrager (2) pumpt.

6. Wärmetauschsystem nach Anspruch 4 oder 5, **dadurch gekennzeichnet, dass** das Thermostatventil (4) zwischen dem Kühlwasserausgang des Zylinderkopfs des Verbrennungsmotors (1) und dem Einlaufstutzen des ersten Wasserkühlers (5) liegt und eine Bypassleitung zwischen dem Einlaufstutzen des ersten Wasserkühlers (5) und dem Einlaufstutzen des zweiten Wasserkühlers (14) vorgesehen ist, die nach der Öffnung des Thermostatventils (4) mehr Kühlwasser durch den zweiten Wasserkühler (14) fließen lässt, um eine niedrige Temperatur des zu den Leistungshalbleitern (11) strömenden Kühlwassers sicherzustellen.

7. Wärmetauschsystem nach Anspruch 4 oder 5, **dadurch gekennzeichnet, dass** im Kühlkreislauf (10) der Leistungshalbleiter (11) ein zweites gesteuertes oder steuerbares Ventil (15) im Zulauf zum oder im Ablauf vom zweiten Wasserkühler (14) vorgesehen ist, welches bereits bei niedrigen Temperaturen zum zweiten Kühler (14) hin öffnet.

8. Wärmetauschsystem nach Anspruch 7, **dadurch gekennzeichnet, dass** das Thermostatventil (4) zwischen dem Kühlwasserausgang des Zylinderkopfs des Verbrennungsmotors (1) und dem Einlaufstutzen des ersten Wasserkühlers (5) liegt und die Verbindungselemente eine Bypassleitung (l₂₀, l₂₂) zwischen dem Zylinderkopf des Verbrennungsmotors (1) und dem Einlaufstutzen des zweiten Wasserkühlers (14) sowie eine Abzweigleitung (21) von dieser Bypassleitung zum Eingang des zweiten Ventils (15) aufweisen.

9. Wärmetauschsystem nach Anspruch 7, **dadurch gekennzeichnet, dass** die Verbindungselemente eine Zweigleitung (l₂₄) direkt zwischen der mechanischen Wasserpumpe (3) und dem Kühlwassereinlauf zum Zylinderkopf des Verbrennungsmotors (1) aufweisen, die zum Eingang des zweiten Ventils (15) führt.

10. Wärmetauschsystem nach einem der Ansprüche 1, 2 und 4, **dadurch gekennzeichnet, dass** ein einziger, intern geteilter Kühler (5) für den Kühlkreislauf (10) der Leistungshalbleiter (11) und den Motorkühlkreislauf (9) mit einem gemeinsamen Einlauf- und getrennten Ablaufstutzen vorgesehen ist, dass das Thermostatventil (4) nach dem Ablaufstutzen des Kühlers (5) und vor der mechanischen Kühlfluidpumpe (3) des Motorkühlkreislaufs (9) vorgesehen ist und während der Aufheizphase bei niedrigen Temperaturen des Kühlfluids geschlossen ist und bei Kühlfluidtemperaturen oberhalb einer bestimmten Öffnungstemperatur öffnet, dass vor dem Einlaufstutzen des Kühlers (5) ein zweites gesteuertes oder steuerbares Ventil (15) vorgesehen ist, das bereits bei niedrigen Temperaturen unterhalb der Öffnungstemperatur des Thermostatventils (4) zum Kühler (5) hin öffnet, und dass die Verbindungselemente (l₁₄, l₂₇) über das zweite Ventil (15) und den Kühlerablaufstutzen für den Kühlkreislauf (10) der Leistungshalbleiter (11) einen Teil des Volumenstroms des Kühlfluids im Motorkühlkreislauf (9) zur elektrischen Pumpe (12) des Kühlkreislaufs (10) der Leistungshalbleiter (11) abzweigen, um die Leistungshalbleiter (11) zu kühlen und diesen Volumenstrom zum Motorkühlkreislauf (9) zwischen der mechanischen Kühlfluidpumpe (3) und dem Thermostatventil (4) zurückführen, wobei bei Stillstand der mechanischen Kühlfluidpumpe (3) die elektrische Pumpe (12) im Kühlkreislauf (10) der Leistungshalbleiters (11) das Kühlfluid durch den Verbrennungsmotor (1) und den Heizungswärmeübertrager (2) pumpt.

11. Wärmetauschsystem nach einem der Ansprüche 1 - 10, **dadurch gekennzeichnet, dass** ein Rückschlagventil (13) stromaufwärts von der mechanischen Kühlfluidpumpe (3) des Motorkühlkreislaufs (9) unmittelbar vor der Rückflussleitung (l₁₁) des Kühlkreislaufs (10) der Leistungshalbleiter liegt, um zu verhindern, dass Kühlfluid bei Strömungsumkehr direkt vom Ausgang der Leistungshalbleiter (11) zur elektrischen Pumpe (12) zurückströmt.

12. Wärmetauschsystem nach einem der Ansprüche 7 - 11, **dadurch gekennzeichnet, dass** das zweite Ventil (15) ein steuerbares Servoventil ist.

13. Wärmetauschsystem nach einem der Ansprüche 7 - 11, **dadurch gekennzeichnet, dass** das zweite Ventil (15) ein Thermostatventil ist.

14. Wärmetauschsystem nach einem der vorangehenden Ansprüche, **dadurch gekennzeichnet, dass** die Öffnungstemperatur des Thermostatventils (4) etwa 90° C ist.

## Claims

1. Heat exchange system for the heating of a vehicle with hybrid drive, in which power semiconductors (11), which emit heat when the vehicle is driving and are cooled by a cooling fluid flowing around the power semiconductors in a cooling circuit (10), are used to control an electric motor of the hybrid drive, and which cooling fluid can flow through a heating heat exchanger (2) of the vehicle, **characterized in that** an internal combustion engine (1) of the hybrid drive has a mechanical cooling fluid pump in an engine cooling circuit (9), the cooling fluid of the electronics cooling circuit (10) is the cooling fluid which flows through the engine cooling circuit (9) of the internal combustion engine (1) in order to cool the latter, and **in that** an electrically driven cooling fluid pump (12) and connecting elements, which even at low cooling fluid temperatures connect the cooling circuit (10) of the power semiconductors (11) to the engine cooling circuit (9) in such a way that an upper temperature limit for the cooling of the power semiconductors (11) is not exceeded, are provided in the cooling circuit (10) of the power semiconductors (11).

2. Heat exchange system according to Claim 1, **characterized in that** the cooling fluid is water or a water/glycol mixture which is customarily used for engine cooling.

3. Heat exchange system according to Claim 2, **characterized in that** the cooling circuit (10) of the power semiconductors (11) and the engine cooling circuit (9) respectively have a separate first and second water cooler (5, 14) for the cooling-water streams.

4. Heat exchange system according to Claim 3, **characterized in that** a thermostatic valve (4), which is closed during the heating phase at low cooling water temperatures and opens a flow path for the cooling water to the first water cooler (5) at cooling water temperatures above a defined opening temperature, is provided in the engine cooling circuit (9).

5. Heat exchange system according to one of Claims 1-4, **characterized in that** the connecting elements (l₁₃, l₁₄, l₁₅), even at low cooling fluid temperatures, branch off part of the volumetric flow of the cooling water in the engine cooling circuit (9) to the electric pump (12) of the cooling circuit (10) of the power semiconductors (11), in order to cool the power semiconductors (11), and return this volumetric flow to the engine cooling circuit (9) at a location upstream of the mechanical water pump (3), the electric pump (12) in the cooling circuit (10) of the power semiconductors (11) pumping the cooling water through the internal combustion engine (1) and the heating heat exchanger (2) when the mechanical water pump (3) is not operating.

6. Heat exchange system according to Claim 4 or 5, **characterized in that** the thermostatic valve (4) is located between the cooling water outlet of the cylinder head of the internal combustion engine (1) and the inlet connection piece of the first water cooler (5), and a bypass line is provided between the inlet connection piece of the first water cooler (5) and the inlet connection piece of the second water cooler (14), which bypass line, after the thermostatic valve (4) has opened, allows more cooling water to flow through the second water cooler (14), in order to ensure a low temperature of the cooling water flowing to the power semiconductors (11).

7. Heat exchange system according to Claim 4 or 5, **characterized in that** in the cooling circuit (10) of the power semiconductors (11) there is a second controlled or controllable valve (15) in the inlet to or the outlet from the second water cooler (14), which second valve opens towards the second cooler (14) even at low temperatures.

8. Heat exchange system according to Claim 7, **characterized in that** the thermostatic valve (4) is located between the cooling water outlet of the cylinder head of the internal combustion engine (1) and the inlet connection piece of the first water cooler (5), and the connecting elements have a bypass line (l₂₀, l₂₂) between the cylinder head of the internal combustion engine (1) and the inlet connection piece of the second water cooler (14), and a branch line (21) running from this bypass line to the inlet of the second valve (15).

9. Heat exchange system according to Claim 7, **characterized in that** the connecting elements have a branch line (l₂₄) leading directly between the mechanical water pump (3) and the cooling water inlet to the cylinder head of the internal combustion engine (1), which leads to the inlet of the second valve (15).

10. Heat exchange system according to one of Claims 1, 2 and 4, **characterized in that** there is a single, internally split cooler (5) for the cooling circuit (10) of the power semiconductors (11) and the engine cooling circuit (9) with a common inlet connection piece and separate outlet connection piece, **in that** the thermostatic valve (4) is provided downstream of the outlet connection piece of the cooler (5) and upstream of the mechanical cooling fluid pump (3) of the engine cooling circuit (9) and is closed during the heating phase at low temperatures of the cooling fluid and opens at cooling fluid temperatures above a defined opening temperature, **in that** a second controlled or controllable valve (15), which opens towards the cooler (5) even at low temperatures below the opening temperature of the thermostatic valve (4), is provided upstream of the inlet connection piece of the cooler (5), and **in that** the connecting elements (l₁₄, l₂₇), via the second valve (15) and the cooler outlet connection piece for the cooling circuit (10) of the power semiconductors (11), branch off part of the volumetric flow of the cooling fluid in the engine cooling circuit (9) to the electrical pump (12) of the cooling circuit (10) of the power semiconductors (11), in order to cool the power semiconductors (11), and return this volumetric flow to the engine cooling circuit (9) between the mechanical cooling fluid pump (3) and the thermostatic valve (4), with the electrical pump (12) in the cooling circuit (10) of the power semiconductors (11) pumping the cooling fluid through the internal combustion engine (1) and the heating heat exchanger (2) when the mechanical cooling fluid pump (3) is not operating.

11. Heat exchange system according to one of Claims 1-10, **characterized in that** a nonreturn valve (13) is located upstream of the mechanical cooling fluid pump (3) of the engine cooling circuit (9), directly before the return line (l₁₁) of the cooling circuit (10) of the power semiconductors, in order to prevent cooling fluid from flowing back directly from the outlet of the power semiconductors (11) to the electrical pump (12) in the event of flow reversal.

12. Heat exchange system according to one of Claims 7-11, **characterized in that** the second valve (15) is a controllable servo valve.

13. Heat exchange system according to one of Claims 7-11, **characterized in that** the second valve (15) is a thermostatic valve.

14. Heat exchange system according to one of the preceding claims, **characterized in that** the opening temperature of the thermostatic valve (4) is approximately 90°C.

## Revendications

1. Système d'échangeur de chaleur pour le chauffage d'un véhicule à entraînement hybride, dont la commande du moteur électrique utilise des semi-conducteurs de puissance (11) dégageant de la chaleur pendant le déplacement et refroidis par un fluide de refroidissement circulant dans un circuit de refroidissement (10) autour des semi-conducteurs de puissance, ce fluide traversant un échangeur de chaleur de chauffage (2) du véhicule,
**caractérisé en ce que**
le moteur à combustion interne (1) de l'entraînement hybride comporte une pompe à réfrigérant mécanique installée dans le circuit de refroidissement (9) du moteur, le réfrigérant du circuit de refroidissement de l'électronique (10) étant le liquide de refroidissement du moteur à combustion interne (1) passant par le circuit de refroidissement (9) du moteur, et
dans le circuit de refroidissement (10) des semi-conducteurs de puissance (11), une pompe à liquide de refroidissement (12) entraînée électriquement ainsi que des éléments de liaison relient déjà aux faibles températures du liquide de refroidissement le circuit de refroidissement (10) des semi-conducteurs de puissance (11) au circuit de refroidissement (9) du moteur pour ne pas dépasser une limite supérieure de refroidissement des semi-conducteurs de puissance (11).

2. Système d'échangeur de chaleur selon la revendication 1,
**caractérisé en ce que**
le liquide de refroidissement est de l'eau ou un mélange eau/glycol, habituellement utilisé pour le refroidissement du moteur.

3. Système d'échangeur de chaleur selon la revendication 2,
**caractérisé en ce que**
le circuit de refroidissement (10) des semi-conducteurs de puissance (11) et le circuit de refroidissement (9) du moteur ont chacun un premier et un second radiateur d'eau (5, 14) séparés pour les flux d'eau de refroidissement.

4. Système d'échangeur de chaleur selon la revendication 3,
**caractérisé en ce qu'**
une soupape thermostatique (4) installée dans le circuit de refroidissement (9) du moteur est fermée pendant la phase de chauffage aux basses températures de l'eau de refroidissement, et pour des températures de l'eau de refroidissement dépassant une certaine température d'ouverture, elle libère un chemin de passage pour l'eau de refroidissement vers le premier radiateur d'eau (5).

5. Système d'échangeur de chaleur selon l'une des revendications 1 à 4,
**caractérisé en ce que**
les éléments de liaison (l₁₃, l₁₄, l₁₅) dérivent déjà aux faibles températures de refroidissement une partie du débit volumique de l'eau de refroidissement du circuit de refroidissement (9) du moteur vers la pompe électrique (12) du circuit de refroidissement (10) des semi-conducteurs de puissance (11) pour refroidir les semi-conducteurs de puissance (11) et reconduire ce débit volumique vers le circuit de refroidissement du moteur (9) en un point en amont de la pompe à eau (3), mécanique, et à l'arrêt de la pompe à eau mécanique (3), la pompe électrique (13) du circuit de refroidissement (10) des semi-conducteurs de puissance (11) pompe l'eau de refroidissement à travers le moteur à combustion interne (1) et l'échangeur de chaleur de chauffage (2).

6. Système d'échangeur de chaleur selon la revendication 4 ou 5,
**caractérisé en ce que**
la soupape thermostatique (4) est installée entre la sortie d'eau de refroidissement de la culasse du moteur à combustion interne (1) et l'ajutage d'entrée du premier radiateur à eau (5), et une conduite de dérivation prévue entre l'ajutage d'entrée du premier radiateur d'eau (5) et l'ajutage d'entrée du second radiateur d'eau (14), laisse passer après ouverture de la soupape thermostatique (4) davantage d'eau de refroidissement à travers le second radiateur d'eau (14) pour garantir une faible température de l'eau de refroidissement passant sur les semi-conducteurs de puissance (11).

7. Système d'échangeur de chaleur selon la revendication 4 ou 5,
**caractérisé en ce qu'**
une seconde soupape commandée ou susceptible d'être commandée (15) dans le circuit d'eau de refroidissement (10) des semi-conducteurs de puissance (11), est installée dans l'arrivée ou la sortie du second radiateur d'eau (14) pour s'ouvrir déjà aux faibles températures vers le second radiateur (14).

8. Système d'échangeur de chaleur selon la revendication 7,
**caractérisé en ce que**
la soupape thermostatique (4) est située entre la sortie d'eau de refroidissement de la culasse du moteur à combustion interne (1) et l'ajutage d'entrée du premier radiateur d'eau (5), et les éléments de liaison ont une conduite de dérivation (l₂₀, l₂₂) entre la culasse du moteur à combustion interne (1) et l'ajutage d'entrée du second radiateur d'eau (14) ainsi qu'une dérivation (21) entre cette conduite de dérivation et l'entrée de la seconde soupape (15).

9. Système d'échangeur de chaleur selon la revendication 7,
**caractérisé en ce que**
les éléments de liaison ont une conduite de dérivation (l₂₄) qui, directement entre la pompe à eau mécanique (3) et l'entrée du radiateur d'eau vers la culasse du moteur à combustion interne (1), conduit à l'entrée de la seconde soupape (15).

10. Système d'échangeur de chaleur selon l'une des revendications 1, 2 et 4,
**caractérisé en ce que**
- un unique radiateur (5) divisé de manière interne pour le circuit d'eau de refroidissement (10) des semi-conducteurs de puissance (11) et le circuit d'eau de refroidissement (9) du moteur comporte un ajutage d'entrée commun et des ajutages de sortie séparés,
- la soupape thermostatique (4) prévue après l'ajutage de sortie du radiateur (5) et avant la pompe à liquide de refroidissement (3) mécanique du circuit de refroidissement (9) du moteur, est fermée pendant la phase de chauffage, aux faibles températures du liquide de refroidissement, et s'ouvre pour des températures de liquide de refroidissement supérieures à une certaine température d'ouverture,
- en amont de l'ajutage d'entrée du radiateur (5), une seconde soupape commandée ou susceptible d'être commandée (15) s'ouvre déjà aux faibles températures sous la température d'ouverture de la soupape thermostatique (4), en direction du radiateur (5) et
- les éléments de liaison (l₁₄, l₂₇) à travers la seconde soupape (15) et l'ajutage de sortie de radiateur du circuit de refroidissement (10) des semi-conducteurs de puissance (11), dérivent une partie du débit volumique du liquide de refroidissement du circuit de refroidissement (9) du moteur vers la pompe électrique (12) du circuit de refroidissement (10) des semi-conducteurs de puissance (11), pour refroidir les semi-conducteurs de puissance et reconduire ce débit volumique vers le circuit de refroidissement (9) du moteur entre la pompe à liquide de refroidissement mécanique (3) et la soupape thermostatique (4), et
- à l'arrêt de la pompe de refroidissement mécanique (3), la pompe électrique (12) pompe dans le circuit de refroidissement (10) des semi-conducteurs de puissance (11), le liquide de refroidissement à travers le moteur à combustion interne (1) et l'échangeur de chaleur de chauffage (2).

11. Système d'échangeur de chaleur selon l'une des revendications 1 à 10,
**caractérisé en ce qu'**
en amont de la pompe à liquide de refroidissement mécanique (3) du circuit de refroidissement (9) du moteur, un clapet anti-retour (13) est monté directement en amont de la conduite de retour (l₁₁) du circuit de refroidissement (10) des semi-conducteurs de puissance, pour empêcher que le liquide de refroidissement en cas d'inversion d'écoulement passe directement de la sortie des semi-conducteurs de puissance (11) pour retourner à la pompe électrique (12).

12. Système d'échangeur de chaleur selon l'une des revendications 7 à 11,
**caractérisé en ce que**
la seconde soupape (15) est une soupape asservie commandée.

13. Système d'échangeur de chaleur selon l'une des revendications 7 à 11,
**caractérisé en ce que**
la seconde soupape (15) est une soupape thermostatique.

14. Système d'échangeur de chaleur selon l'une des revendications précédentes,
**caractérisé en ce que**
la température d'ouverture de la soupape thermostatique (4) est de l'ordre de 90°C.
